# EUROPÄISCHE PATENTSCHRIFT

(11) **EP 3 490 824 B1**
(45) Veröffentlichungstag und Bekanntmachung des Hinweises auf die Patenterteilung: **09.09.2020**
(21) Anmeldenummer: 17745171.3
(22) Anmeldetag: 26.07.2017
(51) Int. Cl.: B60H 1/00

(54) **KLIMATISIERUNGSVORRICHTUNG FÜR EIN KRAFTFAHRZEUG**
AIR CONDITIONING DEVICE FOR A MOTOR VEHICLE
DISPOSITIF DE CLIMATISATION POUR VÉHICULE À MOTEUR

(30) Priorität: 01.08.2016 DE 102016214116
(43) Veröffentlichungstag der Anmeldung: 05.06.2019
(73) Patentinhaber: Volkswagen Aktiengesellschaft, 38440 Wolfsburg (DE)
(72) Erfinder: SCHMITT, Stefan, 38458 Velpke (DE); HOMANN, Gregor, 38442 Wolfsburg (DE)
(86) Internationale Anmeldenummer: PCT/EP2017/068944
(87) Internationale Veröffentlichungsnummer: WO 2018/024583

(56) Entgegenhaltungen:
- DE-A1- 10 317 039
- KR-A- 20120 021 142
- US-A- 3 834 451
- US-A1- 2013 220 584

## Beschreibung

Die Erfindung betrifft eine Klimatisierungsvorrichtung für ein Kraftfahrzeug, umfassend, angeordnet in einem Gehäuse,
- einen von einem Luftstrom durchströmbaren, ersten Wärmeübertrager, der als Verdampfer eines Kältemittelkreises betreibbar ist,
- einen dem ersten Wärmeübertrager in Strömungsrichtung des Luftstroms nachgeschalteten und von dem Luftstrom durchströmbaren, ein Widerstandsheizelement aufweisenden, zweiten Wärmeübertrager und
- eine Luftleitklappe mittels derer, abhängig von ihrer Stellung, Anteile des Luftstroms an dem zweiten Wärmeübertrager vorbeileitbar sind,
wobei die Luftleitklappe als Bypassklappe ausgebildet ist und
- abhängig von ihrer Stellung Anteile des Luftstroms an dem ersten Wärmeübertrager vorbeileitbar sind und
- unabhängig ihrer Stellung jeder Anteil des Luftstroms entweder beide oder keinen der Wärmeübertrager durchströmt.

Derartige Klimatisierungsvorrichtungen sind bekannt aus der KR 2012 0021142 A.

Die EP 1 522 434 A1 offenbart ein Kraftfahrzeug-Klimagerät, in dessen Gehäuse ein Luftleitkanal zwischen einem Gebläse und einem Mischraum, von dem Verteilerkanäle zu Ausströmern in der Fahrgastzelle des Kraftfahrzeugs führen, angeordnet ist. In dem Luftleitkanal sind, in Richtung des Luftstroms vom Gebläse zum Mischraum hintereinander, ein Luftfilter und ein Verdampfer eines Kältemittelkreises angeordnet. Beide Elemente füllen den Querschnitt des Luftleitkanals im Wesentlichen vollständig aus, sodass der gesamte vom Gebläse stammende Luftstrom zunächst den Filter und sodann den Verdampfer durchströmt. Hierbei erfolgt eine Abkühlung und Entfeuchtung des Luftstroms.

In Luftströmungsrichtung hinter dem Verdampfer ist beabstandet von diesem und in zu ihm senkrechter Anordnung, d.h. parallel zur bisherigen Luftströmungsrichtung, ein Heizmodul angeordnet. Die durch den Verdampfer strömende Luft ändert hinter diesem ihre Strömungsrichtung und kann entweder in dem Zwischenraum zwischen Verdampfer und Heizmodul unmittelbar oder auf dem Umweg durch das Heizmodul in den Mischraum strömen. Hierdurch kann eine Gegenheizung der im Verdampfer abgekühlten Luft erfolgen. Das Heizmodul besteht aus einem Hauptheizer und einem Zuheizer. Der Hauptheizer ist als Luft/Kühlmittel-Wärmeübertrager ausgebildet und an den Kühlmittelkreis des Kraftfahrzeugs angeschlossen, über den er mit Abwärme der Verbrennungskraftmaschine gespeist wird. Der Zuheizer ist als Widerstandsheizelement, insbesondere als PTC-Heizelement (PTC: positive temperature coefficient) ausgestaltet, sodass auch bei Fahrtbeginn, wenn das Kühlmittel noch nicht hinreichend aufgeheizt ist, eine Gegenheizung des Luftstroms möglich ist.

Am Eingang des Mischraums ist eine zylindersegmentartig ausgebildete Mischklappe angeordnet. In einer ersten Extremstellung verschließen ihre beiden Flügel einerseits die Verbindung zwischen dem luftseitigen Ausgang des Heizmoduls und dem Zwischenraum zwischen Verdampfer und Heizmodul und andererseits die Verbindung zwischen dem Ausgang des Heizmoduls und dem Mischraum. In dieser Stellung kann die Luft hinter dem Verdampfer ausschließlich auf direktem Wege, d.h. ohne Gegenheizung, in den Mischraum gelangen. In ihrer zweiten Extremstellung verschließt die Mischklappe mit ihren Flügeln einerseits ebenfalls die Verbindung zwischen dem luftseitigen Ausgang des Heizmoduls und dem Zwischenraum zwischen Verdampfer und Heizmodul und andererseits die direkte Verbindung zwischen Verdampfer und Mischraum. In dieser Stellung durchströmt der gesamte Luftstrom hinter dem Verdampfer zunächst das Heizmodul und gelangt dann vollständig gegengeheizt in den Mischraum. Zwischen diesen beiden Extremstellungen sind Zwischenstellungen möglich, in denen jeweils Anteile des Luftstroms den einen oder anderen der zuvor beschriebenen Luftwege durchströmen. Dabei stellt sich im Mischraum eine gewisse Luftschichtung dar, die ausgenutzt wird, um sich an den Mischraum anschließende Verteilkanäle, die in den Fußraum der Fahrgastzelle führen mit wärmerer Luft und Verteilkanäle, die zu höheren Bereichen der Fahrgastzelle führen, mit kälterer Luft zu beschicken.

In teilweise oder vollständig elektrisch betriebenen Kraftfahrzeugen ist die Kapazität des Kühlmittelkreises sehr gering. Der beim Stand der Technik noch als Hauptheizer genutzte Luft/Kühlmittel-Wärmeübertrager verliert daher an Bedeutung und wird zum Teil sogar vollständig verzichtbar. Umso größer wird die Bedeutung des elektrischen Wärmeübertragers, wobei allerdings im Hinblick auf die Reichweitenproblematik eines Elektrofahrzeugs die effiziente Nutzung der zur Verfügung stehenden elektrischen Energie von besonderer Wichtigkeit ist. Eine Anpassung der bekannten Klimatisierungsvorrichtung durch simple Umdimensionierung der einzelnen Elemente des Heizmoduls bis hin zum Verzicht auf den Luft/Kühlmittel-Wärmeübertrager und entsprechend großer Auslegung des elektrischen Wärmeübertragers wäre daher ungenügend.

Aus der eingangs genannten, gattungsbildenden Druckschrift ist es bekannt, die Luftleitklappe als Bypassklappe auszubilden, sodass die Luft in zwei Anteile aufgeteilt werden kann, von denen einer komplett an den Wärmeübertragern vorbei, der zweite aber durch beide Wärmeübertrager hindurch geleitet wird.
Anstelle der Mischklappe am Eingang des Mischraums wird ein den Verdampfer umgehender Seitenpfad des Luftleitkanals bereitgestellt, der mit einer eigenen Luftleitklappe geöffnet bzw. verschlossen werden kann. Dies ist, was im Kontext der vorliegenden Beschreibung unter einer "Bypassklappe" zu verstehen ist. Zusätzlich sind Verdampfer und Heizer so angeordnet, dass die Bypassklappe als einzige Luftleitklappe darüber entscheidet, ob ein gegebener Anteil des Luftstroms überhaupt einen der beiden Wärmeübertrager durchströmt, oder an beiden vorbeigeleitet wird. Mit anderen Worten durchströmt jeder den ersten Wärmeübertrager durchströmende Anteil des Luftstroms auch den zweiten Wärmeübertrager. Luftstromanteile, die den ersten Wärmeübertrager nicht durchströmen, durchströmen auch den zweiten Wärmeübertrager nicht. Ebenso gibt es keine Luftstromanteile, die nur den zweiten, nicht aber den ersten Wärmeübertrager passieren würden.

Dies wird insbesondere dadurch unterstützt, dass der erste und der zweite Wärmeübertrager räumlich parallel zueinander und einander unmittelbar benachbart angeordnet sind.

Dem liegt zugrunde, dass der Heizer in einem elektrischen Fahrzeug, der, wie oben erläutert, im Wesentlichen auf elektrische Weise Wärme erzeugt und insbesondere ausschließlich aus elektrischen Heizelementen bestehen kann, zumindest zu tiefen Temperaturen hin über einen größeren Temperaturbereich steuerbar ist als ein in einen Kühlmittelkreis eingebundener Luft/Kühlmittel-Wärmeübertrager. Insbesondere kann ein elektrischer Heizer nahezu ohne Zeitverlust und ohne dass Wärme kompensatorisch an anderer Stelle abgeführt werden müsste, abgeschaltet werden, sodass mit der ihn durchströmenden Luft keine weitere Wärme ausgetauscht wird. Dies ist sein energiesparendster Betriebsmodus. Um zu verhindern, dass aufgrund der fehlenden oder reduzierten Gegenheizung zu kalte Luft in den Mischraum strömt, kann mittels der Bypassklappe von einer Kühlung des vollständigen Luftstroms abgesehen werden. Die Anteile des Luftstroms, die durch den Verdampfer bzw. an ihm vorbeigeleitet werden, können mittels einer geeigneten Steuer- und Regeltechnik gewählt werden, die einerseits die in der Fahrgastzelle gewünschte Temperatur und andererseits die aktuelle Luftfeuchte, mithin den Entfeuchtungsbedarf des Luftstroms, berücksichtigt. Realisiert wird die Aufteilung des Luftstroms dann durch eine speziell gewählte Klappenstellung der Bypassklappe.

Es hat sich jedoch herausgestellt, dass insbesondere bei kalten Temperaturen die mit dieser Strategie erzielte Gegenheizung nicht immer hinreichend ist.
Es ist daher die Aufgabe der vorliegenden Erfindung, die Gegenheizungsleistung auf effiziente Weise zu verstärken.

Diese Aufgabe wird im Rahmen der vorliegenden Erfindung grundsätzlich dadurch gelöst, dass die Gegenheizung durch einen zusätzlichen, dritten Wärmeübertrager unterstützt wird. Als ein solcher dient erfindungsgemäß ein als Kondensator des Kältemittelkreises betreibbarer, als Luft/Kältemittel-Wärmeübertrager ausgebildeter, dritter Wärmeübertrager. Bekanntermaßen umfasst jeder Kältemittelkreis einen Kompressor zur Verdichtung des Kältemittels und einen Kondensator zur nachfolgenden Abkühlung bzw. Kondensation des Kältemittels (der Begriff des Kondensators wird hier auch für Gaskühler von Kältemittelkreisen mit nicht-kondensierenden Kältemitteln verwendet). Üblicherweise steht dieser Kondensator mit der Fahrzeugumgebung in Verbindung und gibt die dem Kältemittel entnommene Wärme als Abwärme nach außen ab. Bei der vorliegenden Erfindung, bei der es um eine Unterstützung des elektrischen Heizers geht, kann jedoch genau diese, im Kondensator anfallende Wärme zum genannten Zweck genutzt werden.

Allerdings erschöpft sich die vorliegende Erfindung nicht in diesem grundsätzlichen Ansatz. Bei einer Erfindungsvariante gemäß Anspruch 1 wird auf die oben im Kontext der gattungsbildenden Druckschrift beschriebene, unmittelbare Nachbarschaft von erstem und zweitem Wärmeübertrager verzichtet. Vielmehr ist in Strömungsrichtung zwischen dem ersten und dem zweiten Wärmeübertrager besagter dritter Wärmeübertrager angeordnet.

Alternativ kann gemäß der Erfindungsvariante von Anspruch 2 vorgesehen sein, dass der erste Wärmeübertrager wenigstens zwei unterschiedlich ansteuerbare, einander vertikal benachbarte Segmente aufweist, von denen wenigstens das untere als Kondensator des Kältemittelkreises betreibbar ist. Der Grundgedanke dieser Erfindungsvariante entspricht der oben bereits erläuterten Idee, die am Kondensator des Kältemittelkreises anfallende Wärme zur Unterstützung des elektrischen, zweiten Wärmeübertragers zu nutzen. Allerdings wird hier kein dritter Wärmeübertrager eingesetzt, sondern der erste Wärmeübertrager wird vertikal segmentiert, sodass sein vertikal unterer Bereich zum Heizen und sein vertikal oberer Bereich zum Kühlen des Luftstroms genutzt werden kann. Untere Luftstromanteile können daher eine doppelte Aufheizung erfahren, nämlich im unteren Segment des ersten Wärmeübertragers sowie ggf. nachfolgend im elektrischen, zweiten Wärmeübertrager. Obere Luftstromanteile hingegen können im oberen Segment des ersten Wärmeübertragers eine Kühlung und ggf. nachfolgend eine Heizung im zweiten Wärmeübertrager erfahren. Davon unbeeinflusst ist selbstverständlich der über den Seitenpfad (Bypassklappe) geleitete Luftstromanteil. Bei dieser Ausführungsform wird eine besonders günstige Temperaturschichtung im nachfolgenden Mischraum mit nach oben abfallender Temperatur erzeugt. Dies entspricht der eingangs bereits erläuterten Temperaturschichtung zur unterschiedlich temperierten Versorgung unterschiedlicher Verteilerkanäle.

Als weitere Erfindungsvariante gemäß Anspruch 3ist es möglich, dass der zweite Wärmeübertrager wenigstens zwei unterschiedlich ansteuerbare, einander vertikal benachbarte Segmente aufweist, von denen das obere aus einem oder mehreren Widerstandsheizelementen besteht und von denen das untere als Kondensator des Kältemittelkreises betreibbar ist. Bei dieser Erfindungsvariante wird die oben erläuterte Idee der vertikalen Segmentierung eines Wärmeübertragers im Bereich des zweiten Wärmeübertragers realisiert. Dieser arbeitet in seinem oberen Bereich elektrisch und ist in seinem unteren Bereich als Kondensator des Kältemittelkreises betreibbar. Auch auf diese Weise lässt sich die bevorzugte Temperaturschichtung im Mischraum realisieren. Insbesondere in Fällen, in denen in höheren Zonen der Fahrgastzelle gekühlt und im Fußraum beheizt werden soll, ist diese Anordnung besonders energieeffizient, da insbesondere der elektrische Anteil des zweiten Wärmeübertragers nicht oder nur in geringem Maße bestromt werden muss.

In allen Fällen ist es günstig, wenn die Wärmeübertrager jeweils wenigstens zwei unterschiedlich ansteuerbare, einander horizontal und quer zur Strömungsrichtung benachbarte Segmente aufweisen. Auf diese Weise lässt sich nämlich auch eine horizontale Temperaturdifferenzierung im Mischraum erzeugen, sodass die Fahrer- und Beifahrerseite der Fahrgastzelle unterschiedlich voneinander temperiert werden können (sofern vom Mischraum entsprechend angeordnete Verteilkanäle abgehen, was jedoch durchaus üblich ist).

Weitere Merkmale und Vorteile der Erfindung ergeben sich aus der nachfolgenden, speziellen Beschreibung und den Zeichnungen.

Es zeigen:
- Figur 1: eine Ausführungsform einer Innenwärmeübertrager-Anordnung nach dem Stand der Technik,
- Figur 2: eine erste Ausführungsform einer erfindungsgemäßen Innenwärmeübertrager-Anordnung,
- Figur 3: eine zweite Ausführungsform einer erfindungsgemäßen Innenwärmeübertrager-Anordnung,
- Figur 4: eine dritte Ausführungsform einer erfindungsgemäßen Innenwärmeübertrager-Anordnung,
- Figur 5: ein Kältemittelkreis unter Verwendung einer Innenwärmeübertrager-Anordnung gem. Figur 2,
- Figur 6: der Kältemittelkreis von Figur 5 im Wärmepumpenmodus,
- Figur 7: der Kältemittelkreis von Figur 5 im Kühlmodus,
- Figur 8: ein Kältemittelkreis unter Verwendung einer Innenwärmetauscher-Anordnung gem. Figur 3 und
- Figur 9: ein Kältemittelkreis unter Verwendung einer Innenwärmetauscher-Anordnung gem. Figur 4.

Gleiche Bezugszeichen in den Figuren deuten auf gleiche oder analoge Elemente hin.

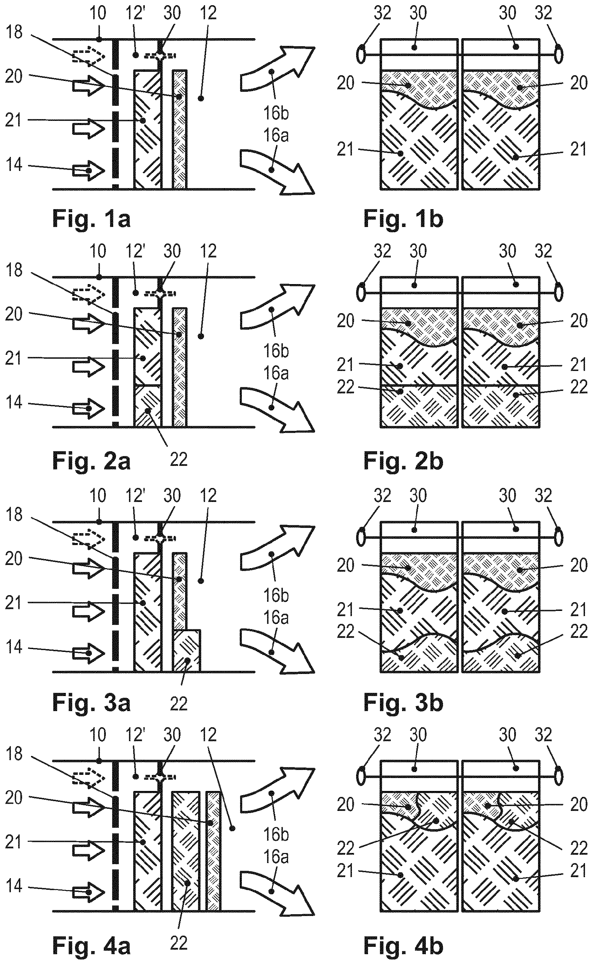

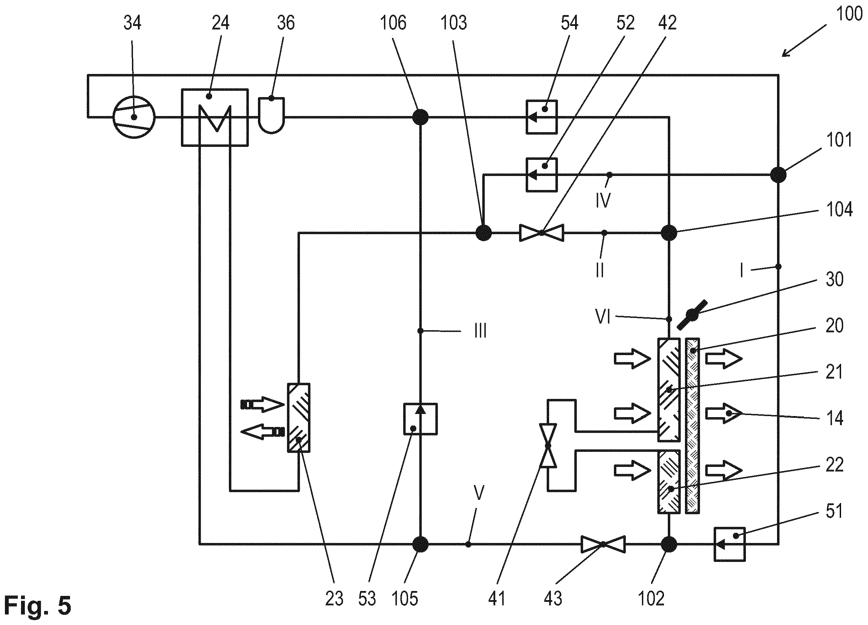

Die Figuren 1-4 zeigen unterschiedliche Innenwärmetauscher-Anordnungen, von denen diejenige von Figur 1 dem Stand der Technik entspricht und diejenigen der Figuren 2-4 unterschiedliche Varianten der vorliegenden Erfindung repräsentieren und besonders vorteilhaft im Zusammenhang mit der nachfolgend noch zu erläuternden Kältemittelkreis-Verschaltung, wie sie in den Figuren 5-9 skizziert ist, Einsatz finden können. Die Teilfiguren 1a - 4a stellen dabei jeweils einen vertikalen Längsschnitt parallel zur Luftleitkanalerstreckung dar. Die Teilfiguren 1b-4b stellen jeweils eine teilweise ausgebrochene Ansicht der Wärmeübertrager in Blickrichtung mit dem Luftstrom dar.

In einem nicht im Detail dargestellten Gehäuse 10 ist ein Luftleitkanal 12 ausgebildet. Der Luftleitkanal 12 ist von einem Luftstrom 14 durchströmbar, der typischerweise von einem vorgelagerten Gebläse erzeugt und in einen nachgelagerten Mischraum geleitet wird, von wo aus er über weitere Verteilkanäle zu Ausströmern in der Fahrgastzelle geleitet wird. In den Figuren 1-4 sind rein beispielhaft in den Fußraum der Fahrgastzelle gerichtete Teilströme 16a und in den Kopfraum der Fahrgastzelle gerichtete Teilströme 16b dargestellt.

Gemeinsam ist den Ausführungsformen der Figuren 1-4 ein den Luftleitkanal überspannender, optionaler Filter 18, mit dem Staub, Pollen und andere Verunreinigungen von den nachgeschalteten Innenwärmeübertragern bzw. von der Fahrgastzelle ferngehalten wird. Der Begriff des Innenwärmeübertragers soll andeuten, dass in diesem Element temperierte Luft in das Innere der Fahrgastzelle strömen kann. Weiter weisen die Ausführungsformen der Figuren 1-4 ein aus Widerstandsheizelementen aufgebautes, elektrisches Wärmeübertragersegment 20 auf, der bevorzugt aus sogenannten PTC-Widerstandselementen (PTC: positiv temperature coefficient) besteht. Zwischen dem optionalen Filter 18 und dem elektrischen Wärmeübertragersegment 20, d.h. luftstromaufwärts des elektrischen Wärmeübertragersegments 20, ist bei allen Ausführungsformen der Figuren 1-4 ein erstes Luft/Kältemittel-Wärmeübertragersegment 21 angeordnet. Die Ausführungsformen der Figuren 2-4 weisen zusätzlich ein zweites Luft/Kältemittel-Wärmeübertragersegment 22 auf, das, je nach Ausführungsform, gemeinsam mit dem ersten Luft/Kältemittel-Wärmeübertragersegment 21 den anspruchssgemäßen ersten Wärmeübertrager bildet (Fig. 2), gemeinsam mit dem elektrischen Wärmeübertragersegment 20 den anspruchsgemäßen zweiten Wärmeübertrager bildet (Fig. 3) oder eigenständig den anspruchsgemäßen dritten Wärmeübertragers (Fig. 4) bildet.

Charakteristisch für sämtliche Ausführungsformen der Figuren 1-4 ist eine Bypassklappe 30, die je nach Schaltstellung einen die Wärmeübertragersegmente 20, 21, 22 umgehenden Seitenpfad 12' des Luftleitkanals 12 schließt oder freigibt. Die geschlossene Klappenstellung ist in den Figuren 1-4 mit durchgezogenen Linien dargestellt. In den Teilfiguren 1a-4a ist die offene Klappenstellung zusätzlich mit gestrichelten Linien dargestellt. In der geschlossenen Klappenstellung wird der gesamte Luftstrom 14 durch die Wärmeübertragersegmente 20, 21, 22 gezwungen, sodass eine Wärmeübertragung zwischen dem Kältemittel und der Luft bzw. zwischen den Widerstandsheizelementen und der Luft zustande kommt. In der offenen Klappenstellung hingegen wird der größte Teil des Luftstroms 14 aufgrund des niedrigeren Strömungswiderstandes über den Seitenpfad 12' strömen, sodass im Wesentlichen keine Wärmeübertragung stattfindet.

Nachfolgend sollen die Unterschiede der Ausführungsformen der Figuren 1-4 diskutiert werden.

Figur 1 stellt die Ausführungsform nach dem Stand der Technik dar. Das elektrische Wärmeübertragersegment 20 und der erste Luft/Kältemittel-Wärmeübertragersegment 21 nehmen hier im Wesentlichen den gleichen Bereich des Querschnitts des Luftleitkanals 12 ein. Das elektrische Wärmeübertragersegment 20 ist dem ersten Luft/Kältemittel-Wärmeübertragersegment 21 in Luftströmungsrichtung nachgelagert. Die Bypassklappe 30 ist im oberen Bereich des Luftleitkanals 12 angeordnet, sodass dessen Seitenpfad 12' im oberen Randbereich des Luftleitkanals 12 verläuft. Bei Klappenstellungen der Bypassklappe 30, die sowohl einen substanziellen Strömungsanteil durch die Wärmeübertragersegmente 20, 21 als auch einen substanziellen Strömungsanteil über dem Seitenpfad 12' erlauben, führt dies zu einer Temperaturschichtung im nachgelagerten Mischraum. Diese kann insbesondere dazu genutzt werden, einen wärmeren Teilstrom 16a in den Fußbereich und einen kühleren Teilstrom 16b in den Kopfraum der Fahrgastzelle strömen zu lassen. Wie in Teilfigur 1b angedeutet, ist zudem eine laterale Segmentierung der Wärmeübertragersegmente 20, 21 vorgesehen, wobei die einzelnen Lateralsegmente vorzugsweise separat ansteuerbar sind. Verfügt der nachgelagerte Mischraum über eine entsprechende Lateralverzweigung, ist es auf diese Weise möglich, den Fahrer- und Beifahrerraum unterschiedlich zu klimatisieren. Die Bypassklappe 30 ist vorzugsweise automatisiert ansteuerbar, wozu die in Teilfigur 1b angedeuteten Stellantriebe 32 nutzbar sind.

Außer über die Stellung der Bypassklappe 30 und die laterale Segmentierung der Wärmeübertragersegmente 20, 21 kann bei besonders bevorzugten Ausführungsformen eine noch kleinteiligere Temperaturdifferenzierung erfolgen. Dies insbesondere dadurch, dass bei solchen Ausführungsformen das elektrische Wärmeübertragersegment 20 aus einer Vielzahl unabhängig ansteuerbarer Widerstandsheizelemente aufgebaut ist.

Bei der Ausführungsform der Figur 2 ist zusätzlich ein zweites Luft/Kältemittel-Wärmeübertragersegment 22 vorgesehen, das vertikal unterhalb des ersten Luft/Kältemittel-Wärmeübertragersegments 21 angeordnet ist. Insbesondere im Kontext der weiter unten noch zu beschreibenden Kältemittelkreis-Schaltungen ist es möglich, das zweite Luft/Kältemittel-Wärmeübertragersegment 22 heizend und das erste Luft/Kältemittel-Wärmeübertragersegment 21 kühlend zu betreiben, was in einer verbesserten Temperaturschichtung im nachgeordneten Mischraum resultiert. Andererseits ist es auch möglich, das erste und das zweite Wärmeübertragersegment 21, 22 auf gleicher Temperatur oder zwar gemeinsam im Kühl- oder Heizmodus, jedoch mit unterschiedlichen Temperaturen zu betreiben. Das elektrische Wärmeübertragersegment 20 kann als Zusatz- bzw. Gegenheizer genutzt werden. Der Fachmann erkennt, dass auf diese Weise eine höchst flexible Gestaltung der Temperaturschichtung im Mischraum ermöglicht wird. Im Übrigen wird analog auf das oben zu Figur 1 gesagte verwiesen.

Bei der Ausführungsform von Figur 3 ist das zweite Luft/Kältemittel-Wärmeübertragersegment 22 vertikal unterhalb des elektrischen Wärmeübertragersegments 20 und in Luftströmungsrichtung hinter dem ersten Luft/Kältemittel-Wärmeübertragersegment 21 angeordnet. Auch hier resultiert eine sehr flexible Gestaltung der Temperaturschichtung im Mischraum, wobei jedoch der Einfluss des ersten Luft/Kältemittel-Wärmeübertragersegments 21 zu Lasten des Einflusses des elektrischen Wärmeübertragersegments 20 steigt. Im Übrigen wird analog auf das oben zu Figur 1 gesagte verwiesen.

Figur 4 schließlich stellt eine Variante dar, bei der das elektrische Wärmeübertragersegment 20, das erste Luft/Kältemittel-Wärmeübertragersegment 21 und das zweite Luft/Kältemittel-Wärmeübertragersegment 22 sämtlich im Wesentlichen den gleichen Bereich des Luftleitkanalquerschnitts einnehmen. Ähnlich wie bei der Ausführungsform von Figur 1 wird die Temperaturschichtung im Mischraum hier im Wesentlichen durch die Bypassklappe 30 und ggf. zusätzlich durch eine kleinteilige Ansteuerbarkeit des elektrischen Wärmeübertragersegments 20 reguliert. Jedoch ist hier aufgrund der größeren Anzahl steuerbarer Wärmeübertragersegmente 20, 21, 22 eine größere Flexibilität bei der Temperierung gegeben.

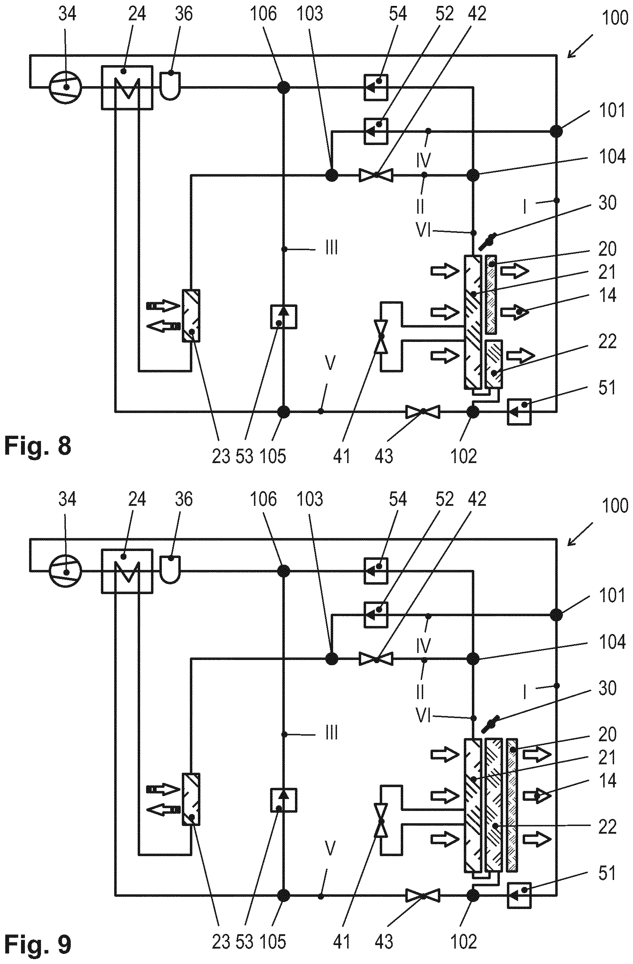

Figur 5 zeigt eine besonders vorteilhafte Verschaltung eines Kältemittelkreises 100, in dem die Innenwärmetauscher-Anordnung von Figur 2 (ohne den selbstverständlich auch hier einsetzbaren, optionalen Filter 18) Einsatz findet. Wie in den Figuren 8 und 9 dargestellt, kann im Wesentlichen die gleiche Schaltung auch unter Verwendung der Innenwärmetauscher-Anordnungen der Figuren 3 und 4 realisiert werden. Die nachfolgenden, auf den Kältemittelkreis 100 von Figur 5 fokussierten Erläuterungen gelten somit unter Berücksichtigung der Anmerkungen zu den Figuren 3 und 4 vollumfänglich auch für die Kältemittelkreise 100 der Figuren 8 und 9.

Der Kältemittelkreis 100 umfasst einen Kompressor 34, mit dem Kältemittel verdichtbar ist. Der Ausgang des Kompressors 34 ist über eine Kältemittelleitung mit einer ersten Verzweigungs- bzw. Mündungsstelle 101 verbunden. Die Begriffe Verzweigungsstelle und Mündungsstelle werden hier austauschbar verwendet. Von der ersten Verzweigungsstelle 101 gehen zwei Kältemittel-Leitungsabschnitte ab, nämlich ein erster Kältemittel-Leitungsabschnitt I und ein vierter Kältemittel-Leitungsabschnitt IV. Der erste Kältemittel-Leitungsabschnitt I enthält ein erstes Absperrventil 51 und endet an einer zweiten Verzweigungs- bzw. Mündungsstelle 102. Der vierte Kältemittel-Leitungsabschnitt IV enthält ein zweites Absperrventil 52 und endet an einer dritten Verzweigungs- bzw. Mündungsstelle 103. Die zweite Mündungsstelle 102 ist mit dem Eingang des zweiten Luft/Kältemittel-Wärmeübertragersegments 22 verbunden. Der Ausgang des zweiten Luft/Kältemittel-Wärmeübertragersegments 22 ist über ein erstes Expansionsventil 41 mit dem Eingang des ersten Luft/Kältemittel-Wärmeübertragersegments 21 verbunden. Der Ausgang des ersten Luft/Kältemittel-Wärmeübertragersegments 21 ist mit einer vierten Verzweigungs- bzw. Mündungsstelle 104 verbunden, die ihrerseits über einen zweiten Kältemittel-Leitungsabschnitt II, der ein zweites Expansionsventil 42 enthält, mit der dritten Mündungsstelle 103 verbunden ist.

Die zweite Mündungsstelle 102 ist weiter über einen fünften Kältemittel-Leitungsabschnitt V, der ein drittes Expansionsventil 43 enthält, mit einer fünften Verzweigungs- bzw. Mündungsstelle 105 verbunden. Diese ist einerseits mit dem Hochdruckausgang eines als Kältemittel/Kältemittel-Wärmeübertrager ausgebildeten inneren Wärmeübertragers 24 und andererseits über einen dritten Kältemittel-Leitungsabschnitt III, der ein drittes Absperrventil 53 enthält, mit einer sechsten Verzweigungs- bzw. Mündungsstelle 106 verbunden, welche ihrerseits über einen Sammler 36 mit dem Niederdruckeingang des inneren Wärmeübertragers 24, dessen Niederdruckausgang mit dem Eingang des Kompressors 34 verbunden ist, verbunden ist.

Der Niederdruckeingang des inneren Wärmeübertragers 24 ist mit dem Ausgang eines als Kühlmittel/Kältemittel-Wärmeübertrager ausgebildeten Koppel-Wärmeübertragers 23 verbunden, der kühlmittelseitig Bestandteil eines nicht näher dargestellten Kühlmittelkreises ist, welcher beispielsweise der Kühlung eines Antriebsaggregates und/oder dessen Elektronik dienen kann. Denkbar ist ein Kühlmittelkreis zur Kühlung einer Verbrennungskraftmaschine. Ebenso kann der Kühlmittelkreis zur Kühlung eines elektrischen Antriebsaggregates und/oder dessen Elektronik, insbesondere der Leistungselektronik und der Traktionsbatterien dienen. Denkbar ist auch die Ausgestaltung des Koppel-Wärmeübertragers als ein als Luft/Kältemittel-Wärmeübertrager ausgebildeter Außen-Wärmeübertrager. Dies ist jedoch energetisch weniger günstig.

Eingangsseitig ist der Koppel-Wärmeübertrager 23 mit der dritten Mündungsstelle 103 verbunden.

Schließlich ist die vierte Verzweigungsstelle 104 über einen sechsten Kältemittel-Leitungsabschnitt VI, der ein viertes Absperrventil 54 enthält, mit der sechsten Mündungsstelle 106 verbunden.

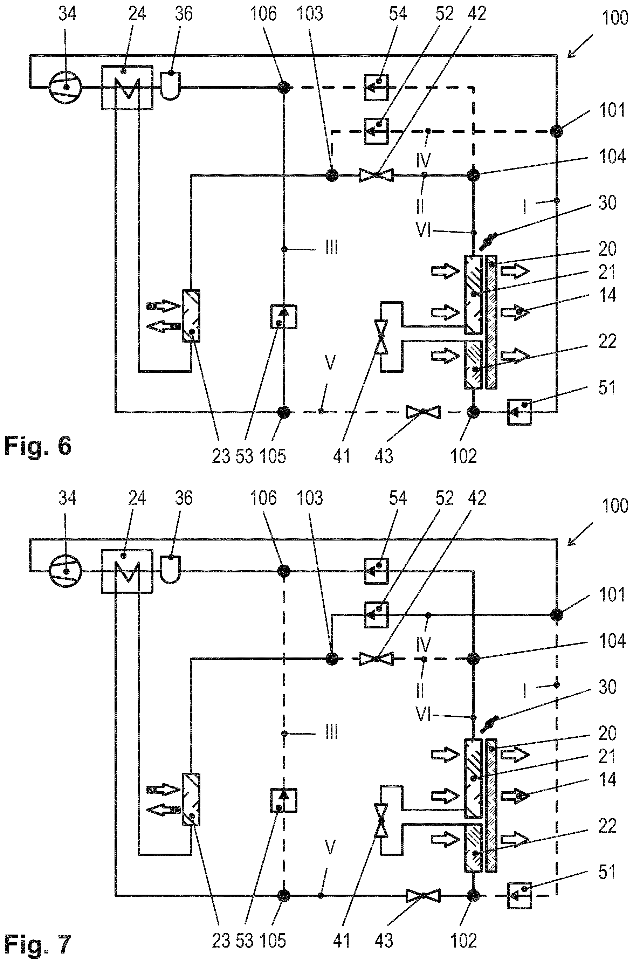

Die bevorzugten Betriebsmoden des Kältemittelkreises 100 von Figur 5 sollen nachfolgend anhand der Figuren 6 und 7 erläutert werden. Diese stellen mit durchgezogenen Linien die jeweils aktiven, d.h. Kältemittel durchströmten Abschnitte der Kältemittelleitung dar. Gestrichelt sind diejenigen Abschnitte dargestellt, die im jeweiligen Modus abgesperrt, d.h. nicht von Kältemittel durchströmt sind.

Figur 6 zeigt den Kältemittelkreis 100 im Wärmepumpenmodus. Hierzu ist das erste Absperrventil 51 geöffnet und das zweite Absperrventil 52 geschlossen. Vom Kompressor 34 komprimiertes Kältemittel strömt somit durch den ersten Kältemittel-Leitungsabschnitt I, wohingegen der vierte Kältemittel-Leitungsabschnitt IV undurchströmt bleibt. Alternativ zur Anordnung der Absperrventile 51, 52 im ersten bzw. vierten Kältemittel-Leitungsabschnitt I, IV wäre es auch möglich, an der ersten Verzweigungsstelle 101 ein schaltbares Zwei-Wege-Ventil zu installieren. Zudem ist im Wärmepumpenmodus das dritte Absperrventil 53 geöffnet und das vierte Absperrventil 54 geschlossen. Damit kann der dritte Kältemittel-Leitungsabschnitt III von Kältemittel durchströmt werden, während der sechste Kältemittel-Leitungsabschnitt VI gesperrt ist. Alternativ zur Anordnung des dritten und vierten Absperrventils 53, 54 im dritten bzw. sechsten Kältemittel-Leitungsabschnitt III, VI könnte auch ein Zweiwegeventil an der sechsten Mündungsstelle 106 Einsatz finden.

Zudem zeichnet sich der Wärmepumpenmodus zusätzlich dadurch aus, dass der fünfte Kältemittel-Leitungsabschnitt V ebenfalls gesperrt ist. Bei der dargestellten Ausführungsform wird hierzu das dritte Expansionsventil 43 genutzt. Alternativ könnte auch ein zusätzliches Absperrventil im fünften Kältemittel-Leitungsabschnitt V hierfür Einsatz finden.

Das im Kompressor 34 komprimierte Kältemittel strömt somit durch den ersten Kältemittel-Leitungsabschnitt I in das zweite Luft/Kältemittel-Wärmeübertragersegment 22. Dieses wird in diesem Modus als Kondensator betrieben und überträgt Wärme vom Kältemittel auf den Luftstrom 14. Vom Ausgang des zweiten Luft/Kältemittel-Wärmeübertragersegments 22 gelangt das Kältemittel über das erste Expansionsventil 41 zum des ersten Luft/Kältemittel-Wärmeübertragersegment 21. Je nach Stellung des ersten Expansionsventils 41 kann der Druckabfall dabei so eingestellt werden, dass das erste Luft/Kältemittel-Wärmeübertragersegment 21 entweder ebenfalls als Kondensator auf im Wesentlichen gleichem Temperaturniveau wie das zweite Luft/Kältemittel-Wärmeübertragersegment 22, als Kondensator, jedoch auf niedrigerem Temperaturniveau als das zweite Luft/Kältemittel-Wärmeübertragersegment 22 oder als Verdampfer, der dem ihn durchströmenden Luftstrom 14 Wärme entzieht, betrieben werden. Die Einstellung des ersten Expansionsventils 41 erfolgt typischerweise im Rahmen einer Regelung zur Erzielung einer gewünschten Temperaturschichtung im nachgelagerten, nicht gesondert dargestellten Mischraum. Bei der dargestellten Ausführungsform strömt der Luftstrom 14 hinter dem ersten und zweiten Luft/Kältemittel-Wärmeübertragersegment 21, 22 noch durch das elektrische Wärmeübertragersegment 20, wo eine Zusatz- oder Gegenheizung erfolgen kann. Im Hinblick auf die Verschaltung des Kältemittelkreises 100 kann das elektrische Wärmeübertragersegment 20 jedoch als optional angesehen werden.

Hinter dem ersten Luft/Kältemittel-Wärmeübertragersegment 21 strömt das Kältemittel an der vierten Verzweigungsstelle 104 in den zweiten Kältemittel-Leitungsabschnitt II, da aufgrund der Sperrstellung des vierten Absperrventils 54 der ebenfalls von der vierten Verzweigungsstelle 104 abgehende sechste Kältemittel-Leitungsabschnitt VI gesperrt ist. Im zweiten Expansionsventil 42, welches im zweiten Kältemittel-Leitungsabschnitt II enthalten ist, erfolgt eine weitere Entspannung des Kältemittels, dessen Druck in jedem Fall so niedrig sein sollte, dass der nachgeschaltete Koppel-Wärmeübertrager 23 als Verdampfer betrieben wird, der Wärme aus dem angeschlossenen Kühlmittelkreis aufnimmt.

Hinter dem Koppel-Wärmeübertrager 23 durchströmt das Kältemittel den Hochdruckteil des inneren Wärmeübertragers 24. Dieser ist, wie der Fachmann erkennen wird, jedoch ebenso wie der Sammler 36 rein optional und im Wesentlichen von der Wahl des Kältemittels abhängig. Denkbar ist auch eine direkte Verbindung des Ausgangs des Koppel-Wärmeübertrager 23 mit der fünften Mündungsstelle 105, mit welcher bei der dargestellten Ausführungsform der Hochdruckausgang des inneren Wärmeübertragers 24 verbunden ist.

Von hier aus durchströmt das Kältemittel das geöffnete dritte Absperrventil 53 und den dritten Kältemittel-Leitungsabschnitt III und gelangt über die sechste Mündungsstelle 106, den Niederdruckteil des inneren Wärmeübertragers 24 zurück zum Kompressor 34.

Figur 7 zeigt den Kältemittelkreis 100 im Kühlmodus. Hierbei ist das erste Absperrventil 51 geschlossen und das zweite Absperrventil 52 geöffnet. Zudem ist das dritte Absperrventil 53 geschlossen und das vierte Absperrventil 54 geöffnet. Das dritte Expansionsventil 53 wird in diesem Modus geregelt betrieben. Das zweite Expansionsventil 52 ist hingegen geschlossen und sperrt den zweiten Kältemittel-Leitungsabschnitt II, wofür bei einer alternativen Ausführungsform auch ein zusätzliches Absperrventil im zweiten Kältemittel-Leitungsabschnitt II genutzt werden könnte.

Das vom Kompressor 34 komprimierte Kältemittel zweigt am ersten Verzweigungspunkt 101 in den vierten Kältemittel-Leitungsabschnitt IV ab und gelangt über die dritte Mündungsstelle 103 zum Eingang des Koppel-Wärmeübertragers 23, der in diesem Modus als Kondensator betrieben wird und Wärme an den angeschlossenen Kühlmittelkreis abgibt. Nach Durchlauf des Hochdruckteils des optionalen inneren Wärmeübertragers 24 strömt das Kältemittel am fünften Verzweigungspunkt 105 aufgrund des geschlossenen dritten Absperrventils 53 in den fünften Kältemittel-Leitungsabschnitt V, wo es mittels des dritten Expansionsventils 43 entspannt wird.

Da das erste Absperrventil 51 geschlossen ist, strömt das entspannte Kältemittel vom zweiten Mündungspunkt 102 in das zweite Luft/Kältemittel-Wärmeübertragersegment 22. Je nach Einstellung des dritten Expansionsventils 43 kann das zweite Luft/Kältemittel-Wärmeübertragersegment 22 dabei als weiterer Kondensator genutzt werden, um Wärme an den ihn durchströmenden Anteil des Luftstroms 14 abzugeben. Es kann jedoch auch als Verdampfer betrieben werden und Wärme aus dem ihn durchströmenden Anteil des Luftstroms 14 aufnehmen. Die Einstellung wird in der Praxis je nach der gewünschten Temperaturschichtung im nicht dargestellten Mischraum geregelt. Kältemittelseitig hinter dem zweiten Luft/Kältemittel-Wärmeübertragersegment 22 erfährt das Kältemittel im ersten Expansionsventil 41 eine weitere Entspannung und durchströmt im Anschluss das erste Luft/Kältemittel-Wärmeübertragersegment 21, das in diesem Modus in jedem Fall als Verdampfer betrieben wird, um Wärme aus dem ihn durchströmenden Anteil des Luftstroms 14 aufzunehmen.

An dem kältemittelseitig hinter dem ersten Luft/Kältemittel-Wärmeübertragersegment 21 gelegenen, vierten Verzweigungspunkt 104 strömt das Kältemitte aufgrund des geschlossenen zweiten Expansionsventils 42 in den sechsten Kältemittel-Leitungsabschnitt und durch das geöffnete vierte Absperrventil 54 zum Sammler 36 und durch den Niederdruckteil des optionalen inneren Wärmeübertragers 24 zurück zum Kompressor 34.

Der Fachmann wird erkennen, dass die drei nicht optionalen Wärmeübertrager bzw. Wärmeübertragersegmente, nämlich das erste Luft/Kältemittel-Wärmeübertragersegment 21, das zweite Luft/Kältemittel-Wärmeübertragersegment 22 und der Koppel-Wärmeübertrager 23 im beschriebenen Kältemittelkreis 100 jeweils sowohl als Kondensator als auch als Verdampfer betrieben werden können. Durch geeignete Einstellung weniger Schalt- und Regelelemente ist beim Kältemittelkreis 100 der Betrieb in zwei grundsätzlichen Moden, nämlich einem Wärmepumpenmodus und einem Kühlmodus möglich, wobei innerhalb jedes der beiden Moden je nach Bedarf eine differenzierte Temperaturschichtung in dem luftseitig den Innenwärmeübertragern nachgeschalteten Mischraum möglich ist. Auf diese Weise lässt sich die Temperaturverteilung in der Fahrgastzelle höchst flexibel und individuell anpassen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Rahmen der Ansprüche ein breites Spektrum an Variationsmöglichkeiten an die Hand gegeben.

### Bezugszeichenliste

- 10: Gehäuse
- 12: Luftleitkanal
- 12': Seitenpfad von 12
- 14: Luftstrom
- 16a: Luftstromanteil zum Fußraum
- 16b: Luftstromanteil zum Kopfraum
- 18: Filter
- 20: elektrisches Wärmeübertragersegment
- 21: erstes Luft/Kältemittel-Wärmeübertragersegment
- 22: zweites Luft/Kältemittel-Wärmeübertragersegment
- 23: Koppel-Wärmeübertrager
- 24: innerer Wärmeübertrager
- 30: Bypassklappe
- 32: Stellantrieb
- 34: Kompressor
- 36: Sammler
- 41: erstes Expansionsventil
- 42: zweites Expansionsventil
- 43: drittes Expansionsventil
- 51: erstes Absperrventil
- 52: zweites Absperrventil
- 53: drittes Absperrventil
- 54: viertes Absperrventil
- 100: Kältemittelkreis
- 101: erste Verzweigungs-/Mündungsstelle
- 102: zweite Verzweigungs-/Mündungsstelle
- 103: dritte Verzweigungs-/Mündungsstelle
- 104: vierte Verzweigungs-/Mündungsstelle
- 105: fünfte Verzweigungs-/Mündungsstelle
- 106: sechste Verzweigungs-/Mündungsstelle
- I: erster Kältemittel-Leitungsabschnitt
- II: zweiter Kältemittel-Leitungsabschnitt
- III: dritter Kältemittel-Leitungsabschnitt
- IV: vierter Kältemittel-Leitungsabschnitt
- V: fünfter Kältemittel-Leitungsabschnitt
- VI: sechster Kältemittel-Leitungsabschnitt

## Patentansprüche

1. Klimatisierungsvorrichtung für ein Kraftfahrzeug, umfassend, angeordnet in einem Gehäuse (10),
- einen von einem Luftstrom (14) durchströmbaren, ersten Wärmeübertrager (21), der als Verdampfer eines Kältemittelkreises betreibbar ist,
- einen dem ersten Wärmeübertrager (21) in Strömungsrichtung des Luftstroms (14) nachgeschalteten und von dem Luftstrom (14) durchströmbaren, ein Widerstandsheizelement aufweisenden, zweiten Wärmeübertrager (20) und
- eine Luftleitklappe (30) mittels derer, abhängig von ihrer Stellung, Anteile des Luftstroms (14) an dem zweiten Wärmeübertrager (20) vorbeileitbar sind,
wobei die Luftleitklappe als Bypassklappe (30) ausgebildet ist und
- abhängig von ihrer Stellung Anteile des Luftstroms (14) an dem ersten Wärmeübertrager (21) vorbeileitbar sind und
- unabhängig ihrer Stellung jeder Anteil des Luftstroms (14) entweder beide oder keinen der Wärmeübertrager (20,21) durchströmt, **dadurch gekennzeichnet, dass** in Strömungsrichtung zwischen dem ersten und dem zweiten Wärmeübertrager (21; 20) ein als Kondensator des Kältemittelkreises (100) betreibbarer, dritter Wärmeübertrager (22) angeordnet ist.

2. Klimatisierungsvorrichtung für ein Kraftfahrzeug, umfassend, angeordnet in einem Gehäuse (10),
- einen von einem Luftstrom (14) durchströmbaren, ersten Wärmeübertrager (21, 22), der als Verdampfer eines Kältemittelkreises betreibbar ist,
- einen dem ersten Wärmeübertrager (21, 22) in Strömungsrichtung des Luftstroms (14) nachgeschalteten und von dem Luftstrom (14) durchströmbaren, ein Widerstandsheizelement aufweisenden, zweiten Wärmeübertrager (20) und
- eine Luftleitklappe (30) mittels derer, abhängig von ihrer Stellung, Anteile des Luftstroms (14) an dem zweiten Wärmeübertrager (20) vorbeileitbar sind,
wobei die Luftleitklappe als Bypassklappe (30) ausgebildet ist und
- abhängig von ihrer Stellung Anteile des Luftstroms (14) an dem ersten Wärmeübertrager (21,22) vorbeileitbar sind und
- unabhängig ihrer Stellung jeder Anteil des Luftstroms (14) entweder beide oder keinen der Wärmeübertrager (21, 22; 20) durchströmt,
**dadurch gekennzeichnet,**
**dass** der erste Wärmeübertrager wenigstens zwei unterschiedlich ansteuerbare, einander vertikal benachbarte Segmente (21, 22) aufweist, von denen wenigstens das untere (22) als Kondensator des Kältemittelkreises (100) betreibbar ist.

3. Klimatisierungsvorrichtung für ein Kraftfahrzeug, umfassend, angeordnet in einem Gehäuse (10),
- einen von einem Luftstrom (14) durchströmbaren, ersten Wärmeübertrager (21), der als Verdampfer eines Kältemittelkreises betreibbar ist,
- einen dem ersten Wärmeübertrager (21) in Strömungsrichtung des Luftstroms (14) nachgeschalteten und von dem Luftstrom (14) durchströmbaren, ein Widerstandsheizelement aufweisenden, zweiten Wärmeübertrager (20, 22) und
- eine Luftleitklappe (30) mittels derer, abhängig von ihrer Stellung, Anteile des Luftstroms (14) an dem zweiten Wärmeübertrager (20, 22) vorbeileitbar sind,
wobei die Luftleitklappe als Bypassklappe (30) ausgebildet ist und
- abhängig von ihrer Stellung Anteile des Luftstroms (14) an dem ersten Wärmeübertrager (21) vorbeileitbar sind und
- unabhängig ihrer Stellung jeder Anteil des Luftstroms (14) entweder beide oder keinen der Wärmeübertrager (21; 20, 22) durchströmt,
**dadurch gekennzeichnet,**
**dass** der zweite Wärmeübertrager wenigstens zwei unterschiedlich ansteuerbare, einander vertikal benachbarte Segmente (20, 22) aufweist, von denen das obere (20) aus einem oder mehreren Widerstandsheizelementen besteht und von denen das untere (22) als Kondensator des Kältemittelkreises (100) betreibbar ist.

4. Klimatisierungsvorrichtung nach einem der vorangehenden Ansprüche,
**dadurch gekennzeichnet,**
**dass** die Wärmeübertrager (21; 21, 22; 20; 20, 22) jeweils wenigstens zwei unterschiedlich ansteuerbare, einander horizontal und quer zur Strömungsrichtung benachbarte Segmente aufweisen.

5. Klimatisierungsvorrichtung nach einem der vorangehenden Ansprüche,
**dadurch gekennzeichnet,**
**dass** der erste und der zweite Wärmeübertrager (21; 21, 22 ; 20; 20, 22) räumlich parallel zueinander angeordnet sind.

## Claims

1. Air conditioning system for a motor vehicle, comprising, arranged in a housing (10),
- a first heat exchanger (21) through which an air flow (14) can flow and which can be operated as an evaporator of a refrigerant circuit,
- a second heat exchanger (20) which is connected downstream of the first heat exchanger (21) in the flow direction of the air flow (14) and through which the air flow (14) can flow, said second heat exchanger (20) having a resistance heating element, and
- an air guide flap (30) by means of which, depending on its position, portions of the air flow (14) can be conducted past the second heat exchanger (20),
wherein the air guide flap is designed as a bypass flap (30) and
- depending on its position, portions of the air flow (14) can be conducted past the first heat exchanger (21), and
- independent of its position, each portion of the air flow (14) flows through either both or none of the heat exchangers (20, 21),
**characterized in that**
a third heat exchanger (22), which can be operated as a condenser of the refrigerant circuit (100), is arranged in the flow direction between the first and the second heat exchanger (21; 20).

2. Air conditioning system for a motor vehicle, comprising, arranged in a housing (10),
- a first heat exchanger (21, 22) through which an air flow (14) can flow and which can be operated as an evaporator of a refrigerant circuit,
- a second heat exchanger (20) which is connected downstream of the first heat exchanger (21, 22) in the flow direction of the air flow (14) and through which the air flow (14) can flow, said second heat exchanger (20) having a resistance heating element, and
- an air guide flap (30) by means of which, depending on its position, portions of the air flow (14) can be conducted past the second heat exchanger (20),
wherein the air guide flap is designed as a bypass flap (30) and
- depending on its position, portions of the air flow (14) can be conducted past the first heat exchanger (21, 22), and
- independent of its position, each portion of the air flow (14) flows through either both or none of the heat exchangers (21, 22; 20),
**characterized in that**
the first heat exchanger has at least two segments (21, 22) that are vertically adjacent to one another and that can be controlled differently, at least the lower (22) of which can be operated as a condenser of the refrigerant circuit (100).

3. Air conditioning system for a motor vehicle, comprising, arranged in a housing (10),
- a first heat exchanger (21) through which an air flow (14) can flow and which can be operated as an evaporator of a refrigerant circuit,
- a second heat exchanger (20, 22) which is connected downstream of the first heat exchanger (21) in the flow direction of the air flow (14) and through which the air flow (14) can flow, said second heat exchanger (20, 22) having a resistance heating element, and
- an air guide flap (30) by means of which, depending on its position, portions of the air flow (14) can be conducted past the second heat exchanger (20, 22),
wherein the air guide flap is designed as a bypass flap (30) and
- depending on its position, portions of the air flow (14) can be conducted past the first heat exchanger (21), and
- independent of its position, each portion of the air flow (14) flows through either both or none of the heat exchangers (21; 20, 22),
**characterized in that**
the second heat exchanger has at least two segments (20, 22) that are vertically adjacent to one another and that can be controlled differently, of which the upper (20) consists of one or more resistance heating elements and of which the lower (22) can be operated as a condenser of the refrigerant circuit (100).

4. Air conditioning system according to any one of the preceding claims, **characterized in that**
the heat exchangers (21; 21, 22; 20; 20, 22) each have at least two segments that can be controlled differently and that are adjacent to one another horizontally and transversely to the flow direction.

5. Air conditioning system according to any one of the preceding claims, **characterized in that**
the first and the second heat exchangers (21; 21, 22; 20; 20, 22) are arranged to be spatially parallel to one another.

## Revendications

1. Dispositif de climatisation destiné à un véhicule à moteur, comprenant, disposés dans un boîtier (10),
- un premier échangeur de chaleur (21) qui peut être parcouru par un flux d'air (14) et qui peut être actionné comme évaporateur d'un circuit de refroidissement,
- un deuxième échangeur de chaleur (20) qui est relié en aval du premier échangeur de chaleur (21) dans le sens de circulation du flux d'air (14), qui peut être parcouru par le flux d'air (14) et qui présente un élément de chauffage résistif et
- un clapet de guidage d'air (30) au moyen duquel, en fonction de sa position, des fractions du flux d'air (14) peuvent être amenées à contourner le deuxième échangeur de chaleur (20),
le clapet de guidage d'air étant réalisé en tant que clapet de dérivation (30) et
- en fonction de sa position, des fractions du flux d'air (14) peuvent être amenées à contourner le premier échangeur de chaleur (21) et
- indépendamment de sa position, chaque fraction du flux d'air (14) soit traverse les deux échangeurs de chaleur (20, 21), soit ne traverse aucun des deux,
**caractérisé en ce que,**
dans le sens d'écoulement, entre les premier et deuxième échangeurs de chaleur (21 ; 20), un troisième échangeur de chaleur (22) est disposé, qui peut être actionné comme condenseur du circuit de refroidissement (100).

2. Dispositif de climatisation destiné à un véhicule à moteur, comprenant, disposés dans un boîtier (10),
- un premier échangeur de chaleur (21, 22) qui peut être parcouru par un flux d'air (14) et qui peut être actionné comme évaporateur d'un circuit de refroidissement,
- un deuxième échangeur de chaleur (20) qui est relié en aval du premier échangeur de chaleur (21, 22) dans le sens de circulation du flux d'air (14), qui peut être parcouru par le flux d'air (14) et qui présente un élément de chauffage résistif et
- un clapet de guidage d'air (30) au moyen duquel, en fonction de sa position, des fractions du flux d'air (14) peuvent être amenées à contourner le deuxième échangeur de chaleur (20),
le clapet de guidage d'air étant réalisé en tant que clapet de dérivation (30) et
- en fonction de sa position, des fractions du flux d'air (14) peuvent être amenées à contourner le premier échangeur de chaleur (21, 22) et
- indépendamment de sa position, chaque fraction du flux d'air (14) soit traverse les deux échangeurs de chaleur (21, 22 ; 20) soit ne travers aucun des deux,
**caractérisé en ce que**
le premier échangeur de chaleur présente au moins deux segments (21, 22) verticalement adjacents et pouvant être commandés individuellement, parmi lesquels au moins le segment inférieur (22) peut être actionné comme condenseur du circuit de refroidissement (100).

3. Dispositif de climatisation destiné à un véhicule à moteur, comprenant, disposés dans un boîtier (10),
- un premier échangeur de chaleur (21) qui peut être parcouru par un flux d'air (14) et qui peut être actionné comme évaporateur d'un circuit de refroidissement,
- un deuxième échangeur de chaleur (20, 22) qui est relié en aval du premier échangeur de chaleur (21) dans le sens de circulation du flux d'air (14), qui peut être parcouru par le flux d'air (14) et qui présente un élément de chauffage résistif et
- un clapet de guidage d'air (30) au moyen duquel, en fonction de sa position, des fractions du flux d'air (14) peuvent être amenées à contourner le deuxième échangeur de chaleur (20, 22),
le clapet de guidage d'air étant réalisé en tant que clapet de dérivation (30) et
- en fonction de sa position, des fractions du flux d'air (14) peuvent être amenées à contourner le premier échangeur de chaleur (21) et
- indépendamment de sa position, chaque fraction du flux d'air (14) soit traverse les deux échangeurs de chaleur (21 ; 20, 22) soit ne traverse aucun des deux,
**caractérisé en ce que**
le deuxième échangeur de chaleur présente au moins deux segments (20, 22) verticalement adjacents et pouvant être commandés individuellement, parmi lesquels le segment supérieur (20) est constitué d'un ou plusieurs éléments de chauffage résistif et parmi lesquels le segment inférieur (22) peut être actionné comme condenseur du circuit de refroidissement (100).

4. Dispositif de climatisation selon l'une quelconque des revendications précédentes,
**caractérisé en ce que**
les échangeurs de chaleur (21 ; 21, 22 ; 20 ; 20, 22) présentent respectivement au moins deux segments adjacents horizontalement et transversalement au sens d'écoulement et pouvant être commandés individuellement.

5. Dispositif de climatisation selon l'une quelconque des revendications précédentes,
**caractérisé en ce que**
les premier et deuxième échangeurs de chaleur (21 ; 21, 22 ; 20 ; 20, 22) sont disposés parallèlement dans l'espace l'un par rapport à l'autre.
